# FASCICULE DE BREVET EUROPEEN

(11) **EP 1 606 765 B1**
(45) Date de publication et mention de la délivrance du brevet: **13.05.2009**
(21) Numéro de dépôt: 04718671.3
(22) Date de dépôt: 09.03.2004
(51) Int. Cl.: G06K 17/00, G06K 19/06

(54) **DISPOSITIF DE REPRESENTATION PAR CODE A BARRES D’UN TICKET DE CONSOMMATION A USAGE MULTIPLE**
VORRICHTUNG ZUR STRICHKODEDARSTELLUNG EINER ZUM MEHRFACHEN GEBRAUCH GEEIGNETEN KARTE
DEVICE FOR BAR-CODE REPRESENTATION OF A MULTIPLE-USE TICKET FOR THE PURPOSE OF CONSUMPTION

(30) Priorité: 27.03.2003 FR 0303798
(43) Date de publication de la demande: 21.12.2005
(73) Titulaire: FRANCE TELECOM, 75015 Paris (FR)
(72) Inventeur: TRINQUET, Dominique, F-14000 Caen (FR); PIEDNOIR, Xavier, F-14000 Caen (FR)
(86) Numéro de dépôt international: PCT/FR2004/000564
(87) Numéro de publication internationale: WO 2004/088578

(56) Documents cités:
- EP-A- 1 178 421
- WO-A-00/39657
- US-A1- 2001 052 545

## Description

La présente invention concerne un dispositif de représentation par code à barres d'un ticket de consommation à usage multiple d'un produit ou d'un service.

L'invention trouve application dans le domaine général du commerce électronique à distance, et, plus particulièrement mais non exclusivement, dans celui du commerce électronique où un utilisateur en situation de mobilité peut commander un produit ou un service donné et obtenir sur un terminal une représentation par code à barres d'un ticket de consommation lui permettant d'accéder au produit ou au service ainsi commandé.

Par « ticket de consommation », on entendra toute forme de tickets proprement dits, comme de tickets de spectacle ou de voyage, mais aussi tout autre type de droits dématérialisés : coupons de réduction, bons de fidélité, ou même simplement l'authentifiant d'une personne en vue, par exemple, de faire débiter un compte pré-payé.

Cependant, l'invention s'applique plus particulièrement au cas de tickets de consommation dits "à usage multiple" en ce sens qu'un produit ou un service attaché à un seul ticket de consommation peut être consommé par son utilisateur à plusieurs reprises selon les modalités de livraison du ticket. On peut citer comme exemple de modalités l'abonnement où le ticket est livré pour un nombre donné d'utilisations (par exemple ticket de transport délivré pour un nombre de trajets donné), ou encore le forfait où le ticket est livré pour une durée donnée d'utilisation (par exemple forfait de remontée mécanique valable pour une durée de séjour dans une station de ski).

Comme on le comprendra mieux plus loin, l'invention peut mettre en oeuvre toutes sortes de terminaux, que ce soit des téléphones mobiles, des assistants personnels (PDA) communicants ou des ordinateurs personnels (PC), l'essentiel étant qu'ils soient munis:
- de moyens de communication aptes à recevoir un message contenant des données de commande dudit produit ou service,
- d'un moyen de sortie graphique apte à représenter ledit ticket de consommation à usage multiple sous forme d'un code à barres. Selon le terminal envisagé, ledit moyen de sortie graphique sera un écran de visualisation graphique ou une imprimante.

Rappelons le principe de la consommation d'un produit ou d'un service au moyen d'un ticket représenté sous forme d'un code à barres sur un terminal. Un utilisateur disposant d'un terminal commande à distance un produit ou un service auprès d'un commerçant ou par l'intermédiaire d'un opérateur de télécommunication. Il peut s'agir par exemple de la commande d'une place de spectacle ou d'un titre de transport. L'utilisateur reçoit, après validation de sa commande et de son paiement, un ticket électronique de consommation s'affichant sur un moyen de sortie graphique de son terminal sous forme d'un code à barres. Lorsque le ticket électronique doit être consommé, il suffit à l'utilisateur de présenter à un lecteur approprié, disposé à l'entrée de la salle de spectacles par exemple, le code à barres affiché sur ledit moyen de sortie graphique. Si le ticket ainsi présenté est reconnu valide par le lecteur alors l'utilisateur sera admis à le consommer, c'est à dire ici à entrer dans la salle de spectacle

Ce principe de billettique électronique s'adresse à un large marché: transport, spectacle, grande distribution. Cette solution présente l'avantage d'être simple à mettre en place et ne nécessite qu'un faible investissement, tout au plus l'achat d'un scanner de codes à barres et du logiciel associé.

Il existe différents types de plates-formes de billettique utilisant un code à barres pour représenter un ticket de consommation sur un terminal. La demande de brevet français n° 02 11233 en particulier décrit une telle plate-forme.

Toutefois, si elles couvrent bien les besoins des solutions de billettique pour des tickets de consommation à usage unique, les plates-formes connues ne sont pas bien adaptées à la représentation par codes à barres de tickets à usage multiple comme les abonnements ou les forfaits.

La demande de brevet WO 00/39657 décrit un système permettant d'envoyer des tickets de consommation à un terminal mobile, mais qui ne permet cependant pas à un tel terminal de gérer lui-même de multiples utilisations d'un tel ticket.

Aussi, le problème technique à résoudre par l'objet de la présente invention est de proposer un dispositif de représentation par code à barres d'un ticket de consommation à usage multiple d'un produit ou d'un service, comprenant un terminal muni:
- de moyens de communication aptes à recevoir un message contenant des données de commande dudit produit ou service,
- d'un moyen de sortie graphique apte à représenter ledit ticket de consommation à usage multiple sous forme d'un code à barres, qui permettrait de pouvoir appliquer facilement aux tickets de consommation à usage multiple le principe de la représentation par code à barres sur terminal.

La solution au problème technique posé consiste, selon la présente invention, en ce que ledit terminal comprend en outre:
- des moyens de stockage desdites données de commande, d'un indicateur d'utilisation du ticket de consommation à usage multiple, et de données relatives au terminal et à l'utilisateur,
- un module de transfert vers lesdits moyens de stockage des données de commande reçues par lesdits moyens de communication,
- un module de génération de codes à barres, apte à constituer un code à barres représentatif du produit ou du service commandé, à partir des données de commande, de l'indicateur d'utilisation et des données relatives à l'utilisateur,
- un module de conversion d'image, apte à fournir ledit ticket de consommation sur le moyen de sortie graphique du terminal par conversion du code à barres constitué par le module de génération en fonction des données relatives au terminal.

Ainsi, le dispositif de représentation selon l'invention est capable de prendre en compte le caractère à usage multiple du ticket de consommation par un traitement dans le terminal lui-même des données de commande reçues, en particulier par la génération d'un indicateur d'utilisation, stocké dans le terminal et inclus dans le code à barres à chaque consommation jusqu'à épuisement du ticket. "

Par ailleurs, on comprend de l'invention qu'après que le ticket à usage multiple ait été stocké dans le terminal, ce dernier assure seul et de manière autonome le contrôle de toutes les utilisations ultérieures du ticket, ce qui présente l'avantage essentiel que la consommation du ticket peut être réalisée en toutes circonstances, en particulier même en dehors d'une zone de couverture géographique lorsque le terminal est un téléphone mobile. On comprendra facilement l'intérêt que cela représente dans le cas, par exemple, d'un forfait pour remontée mécanique dans une station de sports d'hiver, le plus souvent située dans une zone montagneuse non couverte par les opérateurs de téléphonie mobile.

De façon plus précise, l'invention prévoit que, l'usage multiple étant un abonnement pour un nombre donné d'utilisations du ticket de consommation, ledit indicateur d'utilisation est un moyen de comptage du nombre d'utilisations. Ce moyen de comptage peut être un moyen d'incrémentation ou de décrémentation d'un compteur apte à fournir le nombre d'utilisations déjà effectuées ou le nombre d'utilisations restantes.

De même, selon un autre mode de réalisation, l'usage multiple étant un forfait pour une durée donnée d'utilisation du ticket de consommation, ledit indicateur d'utilisation est une date de fin de validité dudit forfait. Le ticket de consommation pourra alors être utilisé tant que la date de fin de validité n'est pas atteinte.

Toujours dans le cas d'un forfait, on peut envisager que, selon l'invention, le code à barres généré par ledit module de génération comprend une information relative à la date de génération dudit code à barres. Cette disposition avantageuse permet de contrôler à la lecture du code à barres, au moment de la présentation du ticket que ce dernier est toujours valide.

A titre de sécurité, il est possible de prévoir, conformément à l'invention, que ledit code à barres comprend également une information relative à une durée de validité. Cette durée de validité comptée à partir de la date de génération du code à barres est typiquement fixée par l'utilisateur lui-même. On comprend dans ce cas qu'un fraudeur ayant pu subtiliser le code à barres du ticket n'aura qu'un temps limité pour pouvoir l'utiliser.

Dans un mode particulier de réalisation du dispositif de représentation, objet de l'invention, ledit terminal comprend un module de veille apte à détecter la réception d'un message contenant des données de commande et à stocker ledit message dans une boîte de réception du terminal, le module de transfert étant apte à transférer les données de commande du message de la boîte de réception vers lesdits moyens de stockage.

Cette dernière disposition permet d'envisager que, selon l'invention, au moins le module de génération de codes à barres et le module de conversion d'image constituent une unité hors circuit du terminal en l'absence d'une action de l'utilisateur.

On entend par "action" la consommation, le transfert, l'échange ou l'annulation du ticket de consommation.

Ainsi, tant que le module de veille n'est pas sollicité par une action quelconque déclenchée par l'opérateur, l'unité consistant en au moins le module de génération de codes à barres et le module de conversion d'image est maintenue hors circuit, en ce sens qu'elle se trouve déconnectée du processeur du terminal, évitant toute consommation inutile de la puissance de ce dernier.

La description qui va suivre en regard du dessin annexé, donné à titre d'exemple non limitatif, fera bien comprendre en quoi consiste l'invention et comment elle peut être réalisée.

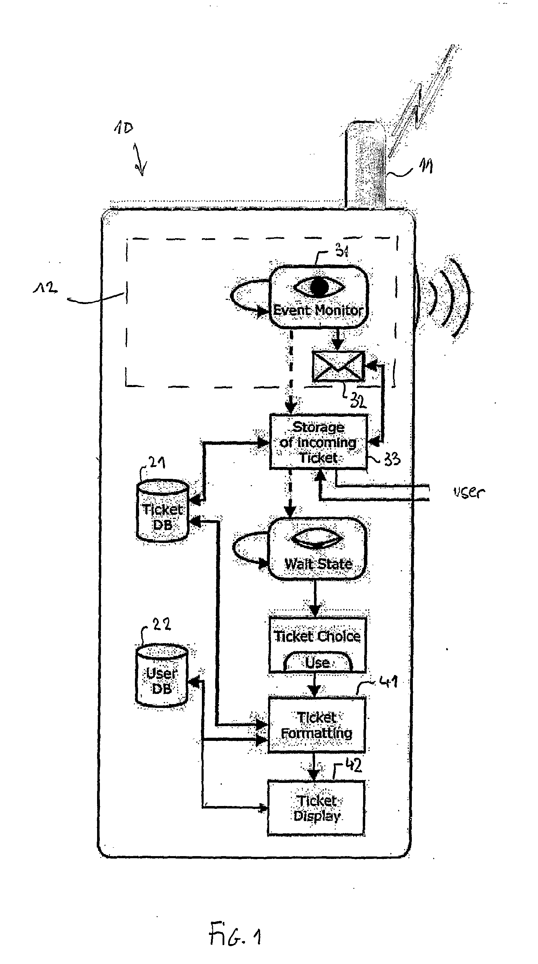

La figure 1 est un schéma d'un terminal intégrant un dispositif de représentation par code à barres d'un ticket de consommation à usage multiple, conforme à l'invention.

Le dispositif de la figure 1 a pour objet de représenter par un code à barres un ticket de consommation à usage multiple d'un produit ou d'un service, ceci au fur et à mesure de sa consommation.

Comme on peut le voir sur la figure 1, ce dispositif comprend essentiellement un terminal 10, ici par exemple un téléphone mobile, étant entendu qu'il pourrait tout aussi bien être constitué par n'importe quel autre type de terminal, tel qu'un assistant personnel (PDA), voire même un ordinateur personnel (PC).

Le terminal 10 de la figure 1 dispose de moyens de communication, schématiquement représentés par une antenne 11, qui sont en fait ceux qui sont normalement mis en oeuvre par le terminal lors de son utilisation. Ce sera en général des moyens de télécommunication à travers un réseau de téléphonie, téléphonie mobile de préférence. C'est à travers ces moyens de communication que l'utilisateur reçoit sur son terminal 10 les messages provenant du serveur d'un commerçant et contenant les données relatives à la commande du produit ou du service faisant l'objet du ticket de consommation à usage multiple destiné à être représenté sous forme de code à barres.

En outre, le terminal 10 comprend un moyen de sortie graphique apte à représenter ledit ticket de consommation à usage multiple sous forme de code à barres. Dans l'exemple de réalisation de la figure 1, ce moyen de sortie graphique est constitué par l'écran 12 de visualisation graphique du téléphone mobile 10. C'est le ticket ainsi constitué et affiché sur l'écran de visualisation graphique qui est présenté au lecteur par l'utilisateur à chaque consommation, ouvrant l'accès au produit ou au service à usage multiple concerné, ceci après vérification par le lecteur de la validité du ticket présenté.

A l'entrée du dispositif de la figure 1 est disposé un module 31 de veille chargé d'intercepter tout message entrant et à détecter la réception d'un message contenant des données de commande et à le stoker, comme tout message, dans la boîte 32 de réception du terminal 10 adaptée au canal de communication utilisé. Les messages de commande peuvent être portés par courrier électronique, SMS (Short Message Service), MMS (Multimedia Message Service), via WAP (Wireless Application Protocol), Bluetooth, IrDA etc.

Lorsqu'un message de réception de données de commande est détecté par le module 31 de veille, l'utilisateur reçoit une notification d'un module 33 de transfert, lequel se met en attente d'un ordre d'acceptation ou de refus du message venant de l'utilisateur.

Après acceptation du message de commande par l'utilisateur, les données relatives à la commande, extraites du message reçu du serveur du commerçant, sont transférées vers un moyen 21 de stockage par le module 33 de transfert depuis la boîte 32 de réception du terminal. Au cours de cette opération, les données sont converties en un même format, par exemple GTD (Generic Ticket Description), qui constitue une représentation générique du ticket, indépendante de la forme prise par les données d'entrée: courrier électronique, SMS, MMS, etc. Cette prise en compte peut être réalisée par des modules logiciels aptes à interpréter les formats des tickets de différents prestataires, lesdits modules étant présents dans le terminal ou bien déportés chez les opérateurs afin également de mieux s'assurer que le réseau n'est pas utilisé pour véhiculer de faux tickets.

Les données de commande reçues sur le terminal sont donc automatiquement transférées dans le premier moyen 21 de stockage dès lors que l'utilisateur a marqué son accord pour les recevoir. Il s'ensuit qu'il n'est plus alors possible de transférer ces données relatives au ticket de consommation à partir de la boîte 32 de réception et donc de les dupliquer par envoi auprès de tiers. La fraude est ainsi rendue impossible. Bien entendu, l'utilisateur peut, s'il le désire, outre la consommation de son ticket, effectuer une autre action comme transférer le ticket à un tiers et même l'échanger ou l'annuler. Toutefois, ces opérations ne pourront se faire qu'à partir du premier moyen 21 de stockage avec destruction des données correspondantes dès que le transfert, l'échange ou l'annulation est réalisé.

Les données stockées dans le premier moyen 21 de stockage décrivent le produit ou le service à usage multiple commandé, par exemple un abonnement à un réseau de transport en commun (ligne, trajet, etc) ou encore un forfait de remontée mécanique dans telle station de sports d'hiver. D'autre part, ces données relatives au produit ou au service sont accompagnées d'un indicateur d'utilisation du ticket à usage multiple, tel que le nombre d'utilisations déjà effectuées ou restantes dans le cas d'un abonnement, ou une date de fin de validité dans le cas d'un forfait.

Afin d'assurer une meilleure sécurité d'un produit ou d'un service consommé sous forme d'un forfait, plus vulnérable à la fraude qu'un abonnement, il y a avantage à ce qu'une date de génération du ticket figure dans le code à barres généré à chaque consommation. Il est ainsi possible de vérifier que le ticket présenté au lecteur est bien valide. De plus, l'utilisateur peut même fixer une durée de validité comptée à partir de ladite date de génération du code à barres, ce qui limite le temps disponible à un fraudeur pour utiliser un code à barres qu'il aurait pu subtiliser.

De même, un deuxième moyen 22 de stockage permet de conserver en mémoire d'autres informations utiles à la constitution du ticket de consommation à usage multiple, à savoir des informations relatives à l'utilisateur lui-même, comme son identité ou son adresse, ou relatives au terminal 10, comme la largeur de l'écran 12 de visualisation graphique ou la possibilité d'un affichage en couleur.

Lorsque l'utilisateur a décidé de consommer son ticket, une unité constituée d'un module 41 de génération de codes à barres et d'un module 42 de conversion d'image est mise en oeuvre afin de représenter sur l'écran 12 de visualisation graphique un code à barres conforme au ticket du produit ou du service à usage multiple concerné.

Le module 41 de génération de codes à barres a pour fonction de constituer un code à barres représentatif du produit ou du service commandé, à partir des données de commande, de l'indicateur d'utilisation et des données relatives à l'utilisateur, et ceci en tenant compte des différents symbolismes existants. A cet effet, le module 41 de génération de codes à barres est apte à collecter et agréger les données de commande et l'indicateur d'utilisation stockés dans le premier moyen 21 de stockage et les données relatives à l'utilisateur stockées dans le deuxième moyen 22 de stockage.

Le module 41 comprend des modules de mise en forme des codes à barres selon des symbolismes particuliers. C'est ainsi que l'on peut trouver des modules de mise en forme de codes Aztec, Datamatrix, QR code, EAN 13, PDF 417. Cette entité modulaire peut ainsi évoluer en fonction des nouveaux symbolismes qui s'avéreront compatibles avec les applications de la billettique électronique, en fonction de l'évolution des terminaux par exemple. Le code à barres est ainsi généré dans un format neutre, GPF ("General Picture Format") par exemple, indépendant du format de sortie, et envoyé au module 42 de conversion d'image.

Lorsque le code à barres est constitué, le module 41 effectue une mise à jour du premier moyen 21 de stockage en modifiant l'indicateur d'utilisation du ticket à usage multiple de manière à le réactualiser pour une utilisation ultérieure. Bien entendu, s'il s'agit d'une dernière utilisation, les données du ticket sont effacées dans le premier moyen 21 de stockage. Eventuellement, le module 41 de génération de codes à barres renseigne le deuxième moyen 22 de stockage en informations de consommation, telles que points de fidélité ou données destinées à établir des statistiques d'usage du produit ou service.

Le module 42 de conversion d'image a pour but de prendre en charge en entrée le code à barres au format neutre GPF et de le convertir au format de sortie désiré. En d'autres termes, le module 42 fournit le ticket de consommation sous forme d'un code à barres d'une manière telle qu'il puisse être représenté sur le moyen 12 de sortie graphique du terminal 10. Pour effectuer la conversion du code à barres, le module 42 utilise les données relatives au terminal stockées dans le deuxième moyen 22 de stockage.

Le module 31 de veille et le module 33 de transfert forment une unité qui se trouve constamment en situation d'attente d'un message de données de commande ou d'une action de l'utilisateur et, de ce fait, cette unité est connectée en permanence avec le processeur du terminal 10.

Par contre, même lorsque le terminal 10 est en fonctionnement, le module 41 de génération de codes à barres et le module 42 de conversion d'image constituent une unité hors circuit du terminal en l'absence d'une action de l'utilisateur. On évite ainsi une consommation inutile de la puissance du processeur du terminal 10.

## Revendications

1. Dispositif de représentation par code à barres d'un ticket de consommation à usage multiple d'un produit ou d'un service, comprenant un terminal (10) muni:
- de moyens (11) de communication aptes à recevoir un message contenant des données de commande dudit produit ou service,
- d'un moyen (12) de sortie graphique apte à représenter ledit ticket de consommation à usage multiple sous forme d'un code à barres,
**caractérisé en ce que** ledit terminal (10) comprend en outre:
- des moyens (21, 22) de stockage desdites données de commande, d'un indicateur d'utilisation du ticket de consommation à usage multiple, et de données relatives au terminal (10) et à l'utilisateur,
- un module (33) de transfert vers lesdits moyens (21, 22) de stockage des données de commande reçues par lesdits moyens (11) de communication,
- un module (41) de génération de codes à barres, apte à constituer un code à barres représentatif du produit ou du service commandé, à partir des données de commande, de l'indicateur d'utilisation et des données relatives à l'utilisateur, ledit module (41) de génération étant en outre apte à effectuer une mise à jour de l'indicateur d'utilisation après une utilisation du ticket de consommation,
- un module (42) de conversion d'image, apte à fournir ledit ticket de consommation sur le moyen (12) de sortie graphique du terminal (10) par conversion du code à barres constitué par le module (41) de génération en fonction des données relatives au terminal (10).

2. Dispositif selon la revendication 1, **caractérisé en ce que**, l'usage multiple étant un abonnement pour un nombre donné d'utilisations du ticket de consommation, ledit indicateur d'utilisation est un moyen de comptage du nombre d'utilisations.

3. Dispositif selon la revendication 1, **caractérisé en ce que**, l'usage multiple étant un forfait pour une durée donnée d'utilisation du ticket de consommation, ledit indicateur d'utilisation est une date de fin de validité dudit forfait.

4. Dispositif selon la revendication 3, **caractérisé en ce que** le code à barres généré par ledit module (41) de génération comprend une information relative à la date de génération dudit code à barres.

5. Dispositif selon la revendication 4, **caractérisé en ce que** ledit code à barres comprend également une information relative à une durée de validité.

6. Dispositif selon l'une quelconque des revendications 1 à 5, **caractérisé en ce que** ledit module (33) de transfert est apte à notifier à l'utilisateur un message de réception de données de commande d'un ticket de consommation et à recevoir un ordre d'action fourni par l'utilisateur.

7. Dispositif selon la revendication 6, **caractérisé en ce que** ladite action est la consommation, le transfert, l'échange ou l'annulation du ticket de consommation.

8. Dispositif selon l'une quelconque des revendications 1 à 7, **caractérisé en ce que** ledit terminal (10) comprend un module (31) de veille apte à détecter la réception d'un message contenant des données de commande et à stocker ledit message dans une boîte (32) de réception du terminal, le module (31) de transfert étant apte à transférer les données de commande du message de la boîte (32) de réception vers lesdits (21, 22) moyens de stockage.

9. Dispositif selon l'une quelconque des revendications 1 à 8, **caractérisé en ce qu'**au moins le module (41) de génération de codes à barres et le module (42) de conversion d'image constituent une unité hors circuit du terminal (10) en l'absence d'une action de l'utilisateur.

10. Dispositif selon l'une quelconque des revendications 1 à 9, **caractérisé en ce que** ledit terminal est un téléphone mobile (10) et le moyen de sortie graphique un écran (12) de visualisation graphique.

## Claims

1. Device for the bar-code representation of a multiple-use consumption ticket for a product or a service, comprising a terminal (10) furnished:
- with communication means (11) capable of receiving a message containing data for ordering said product or service,
- with a graphic output means (12) capable of representing said multiple-use consumption ticket in the form of a bar code,
**characterized in that** said terminal (10) also comprises:
- means (21, 22) for the storage of said order data, of an indicator of use of the multiple-use consumption ticket, and of data relating to the terminal (10) and to the user,
- a module (33) for transfer to said means (21, 22) of storage of the order data received by said communication means (11),
- a bar-code generation module (41) capable of producing a bar code representative of the ordered product or service, based on the order data, on the use indicator and on the data relating to the user, said generation module (41) also being capable of updating the use indicator after use of the consumption ticket,
- an image conversion module (42), capable of supplying said consumption ticket on the graphic output means (12) of the terminal (10) by conversion of the bar code produced by the generation module (41) in accordance with the data relating to the terminal (10).

2. Device according to Claim 1, **characterized in that,** since the multiple use is a subscription for a given number of uses of the consumption ticket, said use indicator is a means for counting the number of uses.

3. Device according to Claim 1, **characterized in that**, since the multiple use is a package deal for a given period of use of the consumption ticket, said use indicator is a date of expiry of said package deal.

4. Device according to Claim 3, **characterized in that** the bar code generated by said generation module (41) comprises information relating to the date of generation of said bar code.

5. Device according to Claim 4, **characterized in that** said bar code also comprises information relating to a period of validity.

6. Device according to any one of Claims 1 to 5, **characterized in that** said transfer module (33) is capable of notifying the user of a message of receipt of the order data of a consumption ticket and of receiving an action instruction supplied by the user.

7. Device according to Claim 6, **characterized in that** said action is the consumption, transfer, exchange or cancellation of the consumption ticket.

8. Device according to any one of Claims 1 to 7, **characterized in that** said terminal (10) comprises a monitor module (31) capable of detecting the receipt of a message containing order data and of storing said message in a reception box (32) of the terminal, the transfer module (31) being capable of transferring the order data of the message from the reception box (32) to said storage means (21, 22).

9. Device according to any one of Claims 1 to 8, **characterized in that** at least the bar-code generation module (41) and the image conversion module (42) form an off-line circuit of the terminal (10) in the absence of an action of the user.

10. Device according to any one of Claims 1 to 9, **characterized in that** said terminal is a mobile telephone (10) and the graphic output means is a graphic display screen (12).

## Patentansprüche

1. Vorrichtung zur Strichcode-Darstellung eines mehrfach nutzbaren Verbrauchstickets eines Produkts oder eines Diensts, die ein Endgerät (10) aufweist, das versehen ist mit:
- Kommunikationseinrichtungen (11), die fähig sind, eine Nachricht zu empfangen, die Bestelldaten des Produkts oder des Diensts enthält,
- eine graphische Ausgabeeinrichtung (12), die fähig ist, das mehrfach nutzbare Verbrauchsticket in Form eines Strichcodes darzustellen,
**dadurch gekennzeichnet, dass** das Endgerät (10) außerdem aufweist:
- Einrichtungen (21, 22) zum Speichern der Bestelldaten, einer Benutzungsanzeige des mehrfach nutzbaren Verbrauchstickets und von Daten bezüglich des Endgeräts (10) und des Benutzers,
- ein Modul (33) zur Übertragung der von den Kommunikationseinrichtungen (11) empfangenen Bestelldaten zu den Speichereinrichtungen (21, 22),
- ein Modul (41) zur Erzeugung von Strichcodes, das fähig ist, ausgehend von den Bestelldaten, der Benutzungsanzeige und den Daten bezüglich des Benutzers einen Strichcode zu bilden, der für das bestellte Produkt oder den bestellten Dienst repräsentativ ist, wobei das Erzeugungsmodul (41) außerdem fähig ist, nach einer Benutzung des Verbrauchstickets eine Aktualisierung der Benutzungsanzeige durchzuführen,
- ein Bildumwandlungsmodul (42), das fähig ist, das Verbrauchsticket auf der graphischen Ausgabeeinrichtung (12) des Endgeräts (10) durch Umwandlung des vom Erzeugungsmodul (41) gebildeten Strichcodes in Abhängigkeit von den Daten bezüglich des Endgeräts (10) zu liefern.

2. Vorrichtung nach Anspruch 1, **dadurch gekennzeichnet, dass,** wenn die Mehrfachnutzung ein Abonnement für eine gegebene Anzahl von Benutzungen des Verbrauchstickets ist, die Benutzungsanzeige eine Einrichtung zum Zählen der Anzahl von Benutzungen ist.

3. Vorrichtung nach Anspruch 1, **dadurch gekennzeichnet, dass**, wenn die Mehrfachnutzung eine Pauschale für eine gegebene Benutzungsdauer des Verbrauchstickets ist, die Benutzungsanzeige ein Ablaufdatum der Pauschale ist.

4. Vorrichtung nach Anspruch 3, **dadurch gekennzeichnet, dass** der durch das Erzeugungsmodul (41) erzeugte Strichcode eine Information bezüglich des Erzeugungsdatums des Strichcodes enthält.

5. Vorrichtung nach Anspruch 4, **dadurch gekennzeichnet, dass** der Strichcode ebenfalls eine Information bezüglich einer Gültigkeitsdauer enthält.

6. Vorrichtung nach einem der Ansprüche 1 bis 5, **dadurch gekennzeichnet, dass** das Übertragungsmodul (33) fähig ist, dem Benutzer eine Empfangsnachricht von Bestelldaten eines Verbrauchstickets mitzuteilen und einen vom Benutzer gelieferten Aktionsbefehl zu empfangen.

7. Vorrichtung nach Anspruch 6, **dadurch gekennzeichnet, dass** die Aktion der Verbrauch, die Übertragung, der Austausch oder die Annullierung des Verbrauchstickets ist.

8. Vorrichtung nach einem der Ansprüche 1 bis 7, **dadurch gekennzeichnet, dass** das Endgerät (10) ein Überwachungsmodul (31) enthält, das fähig ist, den Empfang einer Bestelldaten enthaltenden Nachricht zu erfassen und die Nachricht in einem Posteingang (32) des Endgeräts zu speichern, wobei das Übertragungsmodul (31) fähig ist, die Bestelldaten der Nachricht vom Posteingang (32) zu den Speichereinrichtungen (21, 22) zu übertragen.

9. Vorrichtung nach einem der Ansprüche 1 bis 8, **dadurch gekennzeichnet, dass** mindestens das Strichcode-Erzeugungsmodul (41) und das Bildumwandlungsmodul (42) eine in Abwesenheit einer Aktion des Benutzers ausgeschaltete Einheit des Endgeräts (10) bilden.

10. Vorrichtung nach einem der Ansprüche 1 bis 9, **dadurch gekennzeichnet, dass** das Endgerät ein Mobiltelefon (10) und die graphische Ausgabeeinrichtung ein graphisches Display (12) ist.
